# EUROPÄISCHE PATENTSCHRIFT

(11) **EP 2 628 973 B1**
(45) Veröffentlichungstag und Bekanntmachung des Hinweises auf die Patenterteilung: **12.07.2017**
(21) Anmeldenummer: 13155149.1
(22) Anmeldetag: 14.02.2013
(51) Int. Cl.: F16F 9/32, F16F 9/36, F16J 15/32, F16J 15/56

(54) **Hydropneumatisches Verstellelement**
Hydropneumatic adjustment element
Élément de réglage hydropneumatique

(30) Priorität: 17.02.2012 DE 202012100533 U
(43) Veröffentlichungstag der Anmeldung: 21.08.2013
(73) Patentinhaber: AL-KO Dämpfungstechnik GmbH, 09661 Rossau (DE)
(72) Erfinder: Angermann, Kay, 04720 Döbeln (DE); Miersch,Peter, 04703 Leisnig (DE); Rühle, Christian, 04746 Hartha (DE)
(74) Vertreter: Ernicke, Klaus Stefan

(56) Entgegenhaltungen:
- EP-A1- 0 768 476
- EP-A2- 0 798 485
- DE-A1- 3 831 502
- DE-A1- 10 323 299
- DE-U- 8 114 219
- US-A- 3 372 776
- US-A1- 2005 178 627

## Beschreibung

Die Erfindung betrifft ein hydropneumatisches Verstellelement mit den Merkmalen im Oberbegriff des Hauptanspruchs.
Ein solches hydropneumatisches Verstellelement ist aus der Praxis bekannt z.B. aus US 2005/178627 A1, EP 0 798 485 A2 und DE 81 142 19 U. Es weist einen mit Druckgas und Öl gefüllten Zylinder mit einer Kolbenstange, einer Kolbenstangendichtung, einem Kolben und einem Kolbenbypass für den Gasübertritt auf. Bei derartigen hydropneumatischen Verstellelementen besteht ein Dichtigkeitsproblem. Die Wirkung der Kolbenstangendichtung lässt mit der Zeit nach, so dass das unter hohem Druck stehende Gas auf Grund von Permeabilität durchdringt, somit aus dem Verstellelement entweichen kann und die Kraftwirkung des Verstellelements sinkt.

Es ist Aufgabe der vorliegenden Erfindung, ein verbessertes hydropneumatisches Verstellelement nebst Betriebsverfahren aufzuzeigen.
Die Erfindung löst diese Aufgabe mit den Merkmalen im Hauptanspruch.
Das beanspruchte hydropneumatische Verstellelement ist für eine vorgegebene liegende Einbaulage vorgesehen und ausgebildet, bei der das Dichtigkeitsproblem besonders gravierend ist. In dieser liegenden Einbaulage wird das hydropneumatische Verstellelement betrieben.
Zur Behebung des Dichtigkeitsproblems schlägt die Erfindung eine Bypassausbildung vor, die bei ausfahrender Kolbenstange zu einem Stau einer im Zylinder befindlichen und in Folge zu einer Zwangsbenetzung der Kolbenstangendichtung führt. Die Kolbenstangendichtung bleibt dadurch feucht und behält ihre Dichtwirkung. Vorteilhafterweise findet die Staubildung und Benetzung jedes Mal statt, wenn die Kolbenstange weit ausfährt, insbesondere bis zum Anschlag. Die Flüssigkeit hat bevorzugt Schmierwirkung. Sie kann z.B. ein Öl sein.

Für die Staubildung und Benetzung ist es günstig, wenn der Kolbenbypass derart ausgebildet und angeordnet ist, dass der Übertritt von Flüssigkeit in der besagten Einbaulage verhindert wird. Ferner ist es zur Staubildung und Benetzung vorteilhaft, den Kolbenbypass und insbesondere dessen dichtungseitige Zugangsöffnung bezogen auf die liegende beziehungsweise horizontale Einbaulage möglichst hoch anzuordnen. Der Kolbenbypass kann sich dabei im Kolben selbst oder in der Kolbenstange befinden. Eine stangenseitige Anordnung ist vor allem in Verbindung mit einer blockierbaren Gasfeder und einem in der Kolbenstange befindlichem Blockiermechanismus vorteilhaft. Hierfür empfiehlt sich die Anordnung der dichtungseitigen Zugangsöffnung an der Oberseite der Kolbenstange.

In Ausfahrrichtung vor der Kolbenstangendichtung befindet sich vorzugsweise eine Scheibe oder Hülse. Diese kann mit axialem Abstand oder in Anlage an der Kolbenstangendichtung angeordnet sein. Die Scheibe oder Hülse kann die Kolbenstange mit radialem Abstand umgeben. Günstig ist die Anordnung von einer oder mehreren unten liegenden Durchlassöffnungen an der Scheibe oder Hülse, die den Flüssigkeitsdurchtritt und die Staubildung bzw. Benetzung der unteren Dichtungsbereiche ermöglichen. Vorteilhaft ist eine zur Kolbenstangendichtung hin sich erweiternde konische Form einer solchen Durchlassöffnung.

Das liegend einzubauende hydropneumatische Verstellelement hat dank seiner hohen Dichtigkeit Vorteile für alle Arten von Zylindern, bei denen das Gas mit sehr hohem Druck eingefüllt wird. Insbesondere bestehen Vorteile bei Zylindern mit kurzer Bau- und Hublänge der ausfahrbaren Kolbenstange, die ein besonders hohes Gasdruckniveau haben und die gegen Dichtigkeitsverluste besonders empfindlich sind. In einer bevorzugten Ausführung beträgt die Hublänge 100 bis 200 mm, insbesondere 30 bis 100 mm.

In einer bevorzugten Ausführung ist die Kolbenstangendichtung als Lippendichtung ausgebildet. Ferner ist der Kolben gegenüber dem Zylinder abgedichtet.

In den Unteransprüchen für weitere vorteilhafte Ausgestaltungen der Erfindung angegeben.

Die Erfindung ist in den Zeichnungen vorteilhaft und schematisch dargestellt. Im Einzelnen zeigen:
- Figur 1:: Eine erste Variante eines hydropneumatischen Verstellelements mit liegender Einbaulage in Seitenansicht,
- Figur 2:: einen Längsschnitt durch das Verstellelement von Figur 1,
- Figur 3:: eine Variante eines hydropneumatischen Stellelements mit Schutzrohr in Seitenansicht und
- Figur 4:: einen Längsschnitt durch das Verstellelement von Figur 3.

Die Erfindung betrifft ein hydropneumatisches Verstellelement (1), das auch als Gasdruckfeder oder Gasfeder bezeichnet wird und das bevorzugt in liegender oder horizontaler Stellung am Einsatzort eingebaut wird. Die Erfindung betrifft ferner ein Verfahren zum Betrieb eines hydropneumatischen Verstellelements (1).

Für die Ausbildung des hydropneumatischen Verstellelements (1) sind in den Zeichnungen verschiedene Ausführungsbeispiele dargestellt.

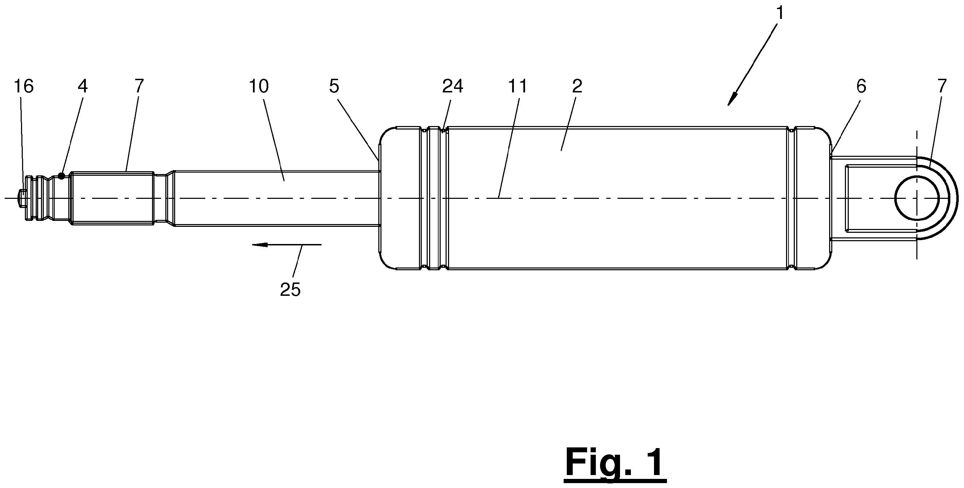

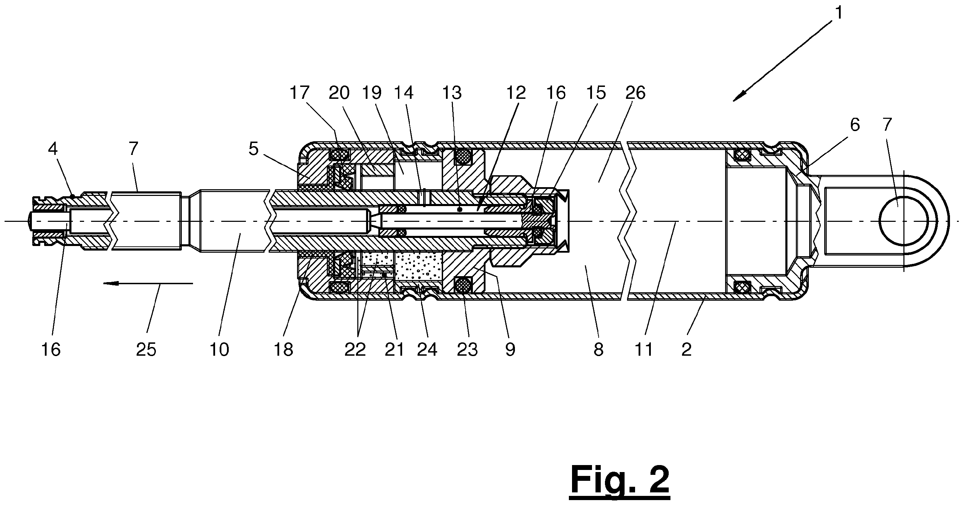

Figur 1 und 2 zeigen eine erste Variante eines hydropneumatischen Verstellelements (1), welches einen Zylinder oder ein Druckrohr (2) mit einem darin verschieblich angeordneten Kolben (9) und einer ausfahrbaren Kolbenstange (10) aufweist. Die Teile sind koaxial zur zentralen Zylinderachse (11) angeordnet.

Der Kolben (9) ist am inneren bzw. rückwärtigen Kolbenstangenende angeordnet. Er ist über eine Kolbendichtung (23) gegenüber dem Zylindermantel abgedichtet und unterteilt den Innenraum (8) des Zylinders (2) in zwei Bereiche (19,26). Der in Ausfahrrichtung (25) vordere und vor dem Kolben befindliche Innenraumbereich wird als Druckkammer (19) bezeichnet.

Der Innenraum (8) ist mit einem unter Druck stehenden Gas, z.B. Stickstoff und mit einer kleinen Menge Flüssigkeit gefüllt. Die Flüssigkeit kann Schmierwirkung haben und ist zum Beispiel ein Öl. Der Zylinder (2) kann in der gezeigten Ausführungsform eine kurze Baulänge von circa 100 bis 200 mm haben. Der Hub der ausfahrbaren Kolbenstange kann zum Beispiel 30 bis 100 mm betragen. Baulänge und Hub können auch größer sein.

Ein solches hydropneumatisches Verstellelement (1) eignet sich zum Beispiel für Sitzmöbel, z.B. Flugzeug- oder Eisenbahnsitze und für eine Lehnenverstellung. Wenn der Einbauraum knapp bemessen ist und die Zylinderlänge bzw. Einbaulänge entsprechend kurz ist, bedarf es eines entsprechend hohen Gasdrucks um die gewünschten Verstellkräfte bereit zu stellen. Der Gasdruck kann z.B. zwischen 30 und 50 bar betragen.

Der rohrförmige Zylinder (2) ist stirnseitig in Ausfahrrichtung (25) vorn durch ein Kopfstück (5) und hinten durch einen Boden (6) verschlossen. Am Boden (6) kann sich ein Anschluss (7), z.B. ein Lagerauge, für die Zylindermontage befinden.

Das Kopfstück (5) weist eine z.B. zentrale Öffnung für den Durchtritt der Kolbenstange (10) auf. Die Kolbenstange (10) kann am frontseitigen Ende ebenfalls einen Anschluss (7), z.B. in Form eines Gewindes, tragen. Das Kopfstück (5) weist eine Kolbenstangenführung (18) und eine dahinter angeordnete und zur Druckkammer (19) weisende Kolbenstangendichtung (17) auf. Die Kolbenstangendichtung (17) umschließt umfangseitig die zylindrische Kolbenstange (10) und dichtet sie gegen unerwünschten Gasaustritt ab. Sie kann z.B. als Lippendichtung ausgebildet sein.

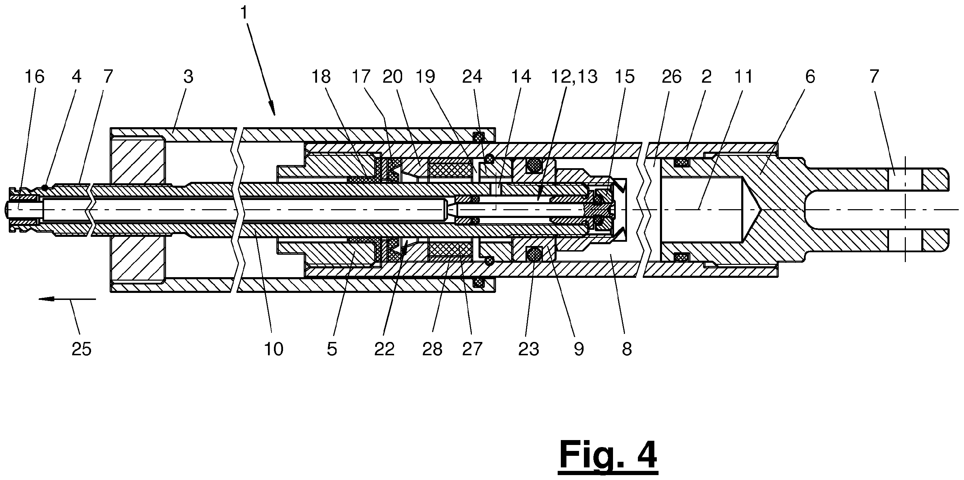

Hinter der Kolbenstangendichtung (17) kann in der Druckkammer (19) eine Scheibe oder Hülse (20) in geeigneter Position angeordnet sein. Die Scheibe oder Hülse (20) kann z.B. wie in Figur 2 mit axialer Distanz zur Kolbenstangendichtung (17) oder wie in Figur 4 in Anlage an der Kolbenstangendichtung (17) angeordnet sein.

Der Kolben (9) ist im gezeigten Ausführungsbeispiel massiv ausgebildet und ist für das Druckgas in Axialrichtung undurchlässig. Die Flüssigkeit befindet sich in der Druckkammer (19) vor dem Kolben (9). Der Kolbenweg in Ausfahrrichtung (25) kann durch einen Anschlag (24) am Zylindermantel begrenzt werden.

Im gezeigten Ausführungsbeispiel ist das Verstellelement (1) blockierbar und weist einen von außen betätigbaren Blockiermechanismus (16) auf, der z.B. in der hohlen Kolbenstange (10) angeordnet ist und auf ein am rückwärtigen Stangenende befindliches Ventil (15) einwirkt.

Der Zylinder (2) weist einen Bypass (12) für den Übertritt des Druckgases aus der Druckkammer (19) in den rückwärtigen Bereich (26) des Innenraums (8) auf. Dieser Bypass oder Kolbenbypass (12) ist im gezeigten Ausführungsbeispiel einer blockierbaren Gasfeder (1) in der Kolbenstange (10) angeordnet. Hier befindet sich vor dem Ventil (15) ein zentraler Hohlraum (13), der über eine radiale Zugangsöffnung (14) im Kolbenstangenmantel mit der Druckkammer (19) in Verbindung steht.

Der Kolbenbypass (12) ist derart ausgebildet und angeordnet, dass im Betrieb des hydropneumatischen Verstellelements (1) und in der vorgegebenen horizontalen oder liegenden Einbaulage oder Achsausrichtung (11) der Übertritt von Flüssigkeit aus dem Druckraum (19) in den hinteren Innenraumbereich (26) verhindert oder zumindest wesentlich vermindert wird. Durch die Bypassausbildung und -anordnung wird ferner erreicht, dass der abgedichtete Kolben (9) bei der Ausfahrbewegung die im Druckraum (19) befindliche Flüssigkeit bzw. das Öl mitnimmt und bei ausgefahrener Kolbenstange (10) gemäß Figur 2 einen Stau (22) der Flüssigkeit an der Kolbenstangendichtung (17) erzeugt. Die im Druckraum (19) angeordnete Flüssigkeitsmenge ist entsprechend auf das verbleibende Volumen der Druckkammer (19) vor dem ausgefahrenen Kolben (9) angepasst. Durch die Staubildung steigt das Flüssigkeitsniveau und sorgt für eine großflächige Dichtungsbenetzung . Dies verhindert ein Austrocknen der Kolbenstangendichtung (17) und eine hierdurch bedingte Gasleckage.

Die besagte Ausbildung und Wirkung des Kolbenbypass (12), der einen Gasübertritt zwischen den Innenraumbereich (19, 26) ermöglicht, einen Flüssigkeitsübertritt aber sperrt oder verhindert, wird bei der gezeigten Ausführungsform durch eine Anordnung der Zugangsöffnung (14) an der Oberseite, insbesondere am Scheitel, der Kolbenstange (10) erreicht. In der Druckkammer (19) kann dadurch das Ölstauniveau über die Zentralachse (11) hinweg bis knapp unter die hochliegende Zugangsöffnung (14) steigen, bevor Flüssigkeit oder Öl in den Hohlraum (13) bzw. Bypass (12) und weiter in den hinteren Innenraumbereich 26 laufen kann.

Eine Benetzung der zur Druckkammer (19) hin frei liegenden Kolbenstangendichtung (17) ist durch diese hohe Öffnungslage über mehr als der Hälfte der Dichtungsfläche bzw. des Dichtungsumfangs möglich. Hinzu kommen dynamische Effekte, welche den Benetzungsgrad noch weiter erhöhen. Das vom ausfahrenden Kolben (9) mit Schwung zur Kolbenstangendichtung (17) bewegte Öl steigt in einem Schwall an der Dichtungswand wie an einer Prallwand nach oben und bewegt sich dabei bis über das Niveau der Zugangsöffnung (14) hinaus. Die zur Druckkammer (19) weisende Dichtungswandung kann dadurch in noch größerem Maße und vollständig oder zumindest fast vollständig benetzt werden.

Die Zugangsöffnung (14) mit geringem Abstand vor oder direkt an der Kolbenfront angeordnet und ist dadurch ein größeres Stück von der Kolbenstangendichtung (17) nach hinten distanziert. Hierdurch kann trotz einer dynamischen Schwallbildung ein Auslaufen der Flüssigkeit bzw. des Öls durch den Bypass (12) verhindert werden. Aus dem Schwall tropfendes Öl läuft dadurch am Kolbenstangenmantel nach unten ab, bevor es bis zur Zugangsöffnung (14) gelangt. Die Kolbenstange (10) kann hierfür eine günstige Querschnittsform aufweisen, die zum Beispiel kreisrund oder oval ist.

Die Zugangsöffnung (14) befindet sich bei Einnahme der in Figur 2 gezeigten Kolbenendstellung außerdem zwischen dem Kolben (9) und der vorerwähnten Scheibe oder Hülse (20), die außenseitig am Mantel eines z.B. abgestuften Kopfstücks (5) oder des Zylinders(2) gehalten ist. Die Zugangsöffnung (14) befindet sich dabei auch im Bereich des Kolbenanschlags (24). Dieser ist zum Beispiel ringförmig gestaltet und umfangseitig an ringförmigen Einprägungen des Zylindermantels gehalten sowie ggf. nach vorn axial am Kopfstück (5) abgestützt.

Die Scheibe oder Hülse (20) weist eine zentrale Durchgangsöffnung für die Kolbenstange (10) auf und umgibt die Kolbenstange (10) mit einem radialen Abstand. Die Scheibe oder Hülse (20) hat im Ausführungsbeispiel von Figur 2 außenseitig eine gewisse Überdeckung mit dem Außenrand der Kolbenstangendichtung (17) und ist von dieser ein kleines Stück axial distanziert. Die Scheibe oder Hülse (20) kann dadurch als Spritzschutz für den Öl- oder Flüssigkeitsschwall dienen und mithelfen, ein rückfließendes Öl oder der Flüssigkeit zur Zugangsöffnung (14) zu verhindern oder zumindest zu erschweren.

Die Scheibe oder Hülse (20) hat andererseits an dem in Einbaulage unteren Bereich eine oder mehrere Durchlassöffnungen (21) für den Flüssigkeitsdurchtritt und die Staubildung. Hierdurch kann der gesamte untere Dichtungsbereich vollständig erreicht und benetzt werden.

Das pneumatische Verstellelement (1) weist ferner eine Einbaulagensicherung (4) auf, mit der eine korrekte Einbaulage mit Bezug auf die gewünschte Position der Zugangsöffnung (14) des Kolbenbypass (12) sichergestellt werden kann. In der gezeigten Ausführungsform wird die Einbaulagensicherung (4) von einer Markierung an der Oberseite des außenliegenden Kolbenstangenendes gebildet. Eine von oben sichtbare Markierung (4) signalisiert eine obere Lage der Zugangsöffnung (14). Bei falscher und um 180° um die Achse (11) gedrehter Einbaulage ist die Markierung (4) nicht sichtbar, wobei die Zugangsöffnung (14) nach unten weist und nicht die gewünschte stau- und benetzungsbildende Funktion hat.

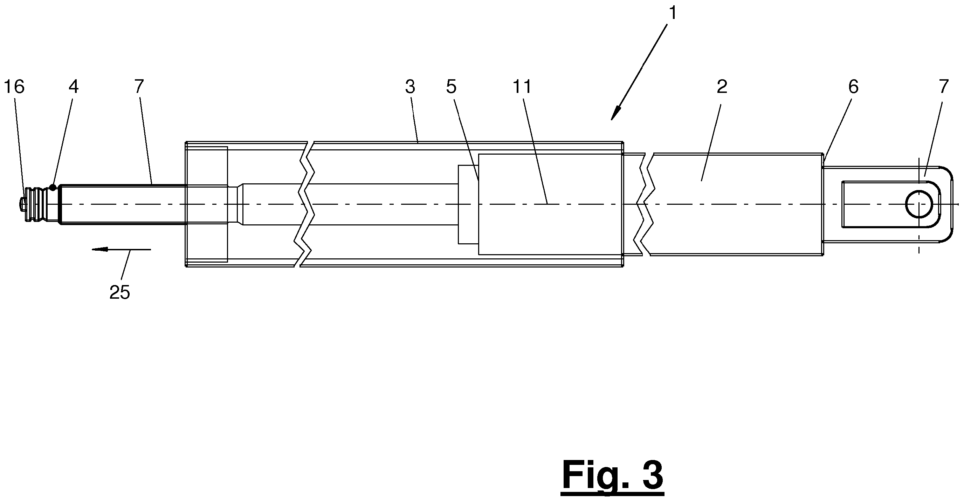

Figur 3 und 4 zeigen eine andere Variante des hydropneumatischen Verstellelements (1), das in diesem Fall ein größere Bau- und Hublänge haben kann. Die Elementteile Zylinder (2), Kolben (9), Kolbenstange (10), Innenraumausbildung, Scheibe (20) und Kolbendichtung (17) können gleich oder ähnlich wie im ersten Ausführungsbeispiel ausgebildet sein.

Figur 4 zeigt andererseits Abwandlungsmöglichkeiten für die Scheibe oder Hülse (20) und für die Flüssigkeits- oder Ölaufnahme.

Die Scheibe oder Hülse (20) ist in der gezeigten Ausführungsform massiv ausgebildet und liegt umfangseitig am Zylinderinnenmantel an. Auf Durchgangsöffnungen (21) kann in diesem Fall verzichtet werden. Ein Flüssigkeits- oder Öldurchtritt ist an der zentralen Durchlassöffnung möglich, welche die Kolbenstange (10) mit einem radialen Abstand umgibt. In der Variante von Figur 4 ist die Scheibe oder Hülse (20) axial in Anlage an der Kolbenstangendichtung (17) im Zylinder (2) montiert. Sie kann dabei eine zur Kolbenstangendichtung (17) hin sich konisch erweiternde Form ihrer Durchlassöffnung haben. Dies bietet einen ausreichend großen Staubildungsbereich (22) vor der Dichtung (17) und insbesondere an deren beweglicher Lippe.

Bei der Variante von Figur 4 ist ein Speicherelement (27) für die Flüssigkeit, insbesondere das Öl, angeordnet, welches sich in Axialrichtung hinter der Scheibe oder Hülse (20) befinden kann. Das Speicherelement (27) kann z.B. schwammartig ausgebildet sein. In der gezeigten Ausführungsform besteht es aus einem Zellelastomer. Das Speicherelement (27) kann eine Ringform haben und die Kolbenstange (10) mit einem radialen Abstand umgeben.

Das Speicherelement (27) kann umfangseitig eine formstabile Hülse (28) mit gleicher Breite aufweisen, welche an der Zylinderinnenwand anliegend und montiert ist. Die Hülse (28) kann eine Stabilisierungs- und Distanzierungsfunktion für das Speicherelement (27) haben. Das Speicherelement (27) kann mit der Hülse (28) in etwa die gleiche radiale Dicke wie die Scheibe oder Hülse (20) haben, wobei ihre Durchgangsöffnungen im wesentlichen fluchten. In Axialrichtung kann zwischen dem hinteren Ende des Speicherelements (27) und dem Kolbenanschlag (24) ein Spalt vorhanden sein Alternativ ist eine Anlage möglich. Die Scheibe oder Hülse (20) und das Speicherelement (27) mit seiner Distanzhülse (28) können sich ggf. im Zylinder (2) axial etwas bewegen.

Die Kolbenstange (10) kann in der zweiten Ausführungsform nach vorn verlängert sein. Das hydropneumatische Verstellelement (1) kann außerdem ein Schutzrohr (3) aufweisen, welches den Zylinder (2) und die Kolbenstange (10) außenseitig umgibt und bei der Ausfahrbewegung mitbewegt wird. Frontseitig ist das Schutzrohr (3) mit einer Stirnscheibe am vorderen Kolbenstangenende befestigt, z.B. am Anschluss (7). Das Schutzrohr (3) gleitet auf dem Zylinder (2) axial entlang und kann am rückwärtigen Vorende eine Abdichtung zum Zylindermantel aufweisen.

Das Stellelement (1) des zweiten Ausführungsbeispiels kann ebenfalls blockierbar sein und einen innen liegenden Blockiermechanismus (16) mit einem in der Kolbenstange (10) angeordneten Kolbenbypass (12) und einer hochliegenden Zugangsöffnung (14) an der Stangenoberseite aufweisen. Desgleichen ist auch eine Einbaulagensicherung (4) sowie ein Kolbenanschlag (24) und eine Scheibe oder Hülse (20) vorhanden. Die Bildung des Flüssigkeits- oder Ölstaus (22) folgt ebenfalls in der vorbeschriebenen Weise wie beim ersten Ausführungsbeispiel.

Abwandlungen der gezeigten und beschriebenen Ausführungsformen sind in verschiedener Weise möglich. Die Zugangsöffnung (14) kann mehrfach vorhanden sein, wobei sich mehrere Öffnungen in einer axialen Reihe an der Oberseite, insbesondere am Scheitel, der Kolbenstange (10) wie in den gezeigen Ausführungsbeispielen befinden. Sie können alternativ in anderer Weise verteilt sein und sich zumindest im oberen Bereich der Kolbenstange (10) befinden.

In einer anderen, nicht dargestellten anderen Ausführungsform kann der Bypass (12) im Kolben (9) angeordnet sein, wobei die Kolbenstange (10) eine geschlossene und für die Medien im Innenraum (8) eine undurchlässige Form haben kann. Bei einem solchen Bypass, der zum Beispiel als einfaches Drosselventil ausgebildet ist, befindet sich die dichtungseitige Zugangsöffnung ebenfalls oberhalb der Zentralachse (11) und verhindert durch die hoch liegende Lage einen Flüssigkeits- oder Ölübertritt aus dem Druckraum (19) in den hinteren Innenraumbereich (26). Zu dieser Variante kann es ebenfalls vielfältige Abwandlungen für die konstruktive Ausgestaltung des Kolbenbypass (12) geben. Ansonsten sind weitere Bypassvarianten, z.B. mit außenseitig in Hochlage am Zylinder (2) angeordneten Überströmkanälen möglich.

Die Einbaulagensicherung (4) kann in anderer Weise realisiert werden, z.B. durch konstruktive Vorgaben an dem oder den Anschlüssen (7), die nur eine liegende Montagestellung und Drehlage um die Achse (11) zulassen, in der eine Zugangsöffnung (14) eine hoch liegende Position hat. Auch die sonstigen konstruktiven Ausgestaltungen des hydropneumatischen Verstellelements (1) können beliebig variieren. Insbesondere kann ein Kolbenbypass (12) in der Kolbenstange (10) auch ohne Blockiermechanismus (16) und ohne Ventil (15) vorhanden sein.

Außerdem ist es möglich, das hydropneumatische Verstellelement (1) mit einer geringfügigen Schräglage am Einsatzort einzubauen. Das vordere und freie Kolbenstangenende kann dabei nach oben oder nach unten gerichtet sein. Ein günstiger Neigungswinkelbereich bei schräger Einbaulage beträgt z.B. bis zu ± 5° gegen die Horizontale. Der Neigungswinkel kann alternativ größer sein.

Ferner können die in den Ausführungsbeispielen gezeigten Merkmale zur Bildung weiterer Varianten miteinander kombiniert oder vertauscht werden.

### BEZUGSZEICHENLISTE

- 1: Verstellelement hydropneumatisch, Gasfeder
- 2: Zylinder, Druckrohr
- 3: Schutzrohr
- 4: Einbaulagensicherung, Markierung
- 5: Kopfstück
- 6: Boden
- 7: Anschluss
- 8: Innenraum
- 9: Kolben
- 10: Kolbenstange
- 11: Achse, Zylinderachse
- 12: Bypass, Kolbenbypass
- 13: Hohlraum
- 14: Zugangsöffnung
- 15: Ventil
- 16: Blockiermechanismus
- 17: Dichtung, Kolbenstangendichtung
- 18: Führung, Kolbenstangenführung
- 19: Druckkammer
- 20: Scheibe Hülse
- 21: Durchlassöffnung
- 22: Stau, Flüssigkeitsstau, Ölstau
- 23: Kolbendichtung
- 24: Anschlag, Kolbenanschlag
- 25: Ausfahrrichtung
- 26: hinterer Innenraumbereich
- 27: Speicherelement, Ölspeicher
- 28: Hülse, Distanzhülse

## Patentansprüche

1. Hydropneumatisches Verstellelement, welches einen mit Druckgas und einer Flüssigkeit, insbesondere Öl, gefüllten Zylinder (2) mit einer Kolbenstange (10) einer Kolbenstangendichtung (17), einem Kolben (9) und einem Kolbenbypass (12) aufweist, **dadurch gekennzeichnet, dass** das Verstellelement (1) eine vorgegebene liegende Einbaulage aufweist, wobei der Kolbenbypass (12) derart ausgebildet und angeordnet ist, dass der Übertritt von Flüssigkeit verhindert wird und der Kolben (9) bei ausfahrender Kolbenstange (10) einen Flüssigkeitsstau (22) an der Kolbenstangendichtung (17) für deren Benetzung erzeugt.

2. Verstellelement nach Anspruch 1, **dadurch gekennzeichnet, dass** eine dichtungseitige Zugangsöffnung (14) für den Kolbenbypass (12) oberhalb der zentralen Zylinderachse (11) angeordnet ist.

3. Verstellelement nach Anspruch 1 oder 2, **dadurch gekennzeichnet, dass** der Kolbenbypass (12) in der Kolbenstange (10) angeordnet ist, wobei seine dichtungseitige Zugangsöffnung (14) an der Oberseite der Kolbenstange (10) angeordnet ist.

4. Verstellelement nach Anspruch 1, 2 oder 3, **dadurch gekennzeichnet, dass** das Verstellelement (1) einen Blockiermechanismus (16) aufweist, wobei bevorzugt ein Bypass (12) und ein Blockiermechanismus (16) in der Kolbenstange (10) angeordnet sind.

5. Verstellelement nach einem der vorhergehenden Ansprüche, **dadurch gekennzeichnet, dass** vor der Kolbenstangendichtung (17) eine Scheibe oder Hülse (20) angeordnet ist, welche die Kolbenstange (10) mit radialem Abstand umgibt.

6. Verstellelement nach Anspruch 5, **dadurch gekennzeichnet, dass** die Scheibe oder Hülse (20) eine unten liegenden Durchlassöffnung (21) für den Flüssigkeitsdurchtritt aufweist.

7. Verstellelement nach einem der vorhergehenden Ansprüche, **dadurch gekennzeichnet, dass** eine dichtungseitige Zugangsöffnung (14) für den Kolbenbypass (12) an der Kolbenstange (10) mit einem derartigen Abstand vor dem Kolben (9) angeordnet ist, dass sie sich bei ausgefahrener Kolbenstange (10) im Bereich eines Kolbenanschlags (24) befindet.

8. Verstellelement nach einem der vorhergehenden Ansprüche, **dadurch gekennzeichnet, dass** die Flüssigkeitsmenge auf das Volumen des Druckraums (19) vor dem ausgefahrenen Kolben (9) angepasst ist.

9. Verstellelement nach einem der vorhergehenden Ansprüche, **dadurch gekennzeichnet, dass** im Druckraum (19) eine Speicherelement (27) für die Flüssigkeit, insbesondere das Öl, angeordnet ist.

10. Verstellelement nach einem der vorhergehenden Ansprüche, **dadurch gekennzeichnet, dass** ein bevorzugt ringförmig und schwammartig, insbesondere als Zellelastomer, ausgebildetes Speicherelement (27) umfangseitig von einer formstabilen Hülse (28) umgeben ist.

11. Verstellelement nach einem der vorhergehenden Ansprüche, **dadurch gekennzeichnet, dass** das Verstellelement (1) eine Einbaulagensicherung (4), insbesondere eine Markierung, aufweist.

12. Verstellelement nach einem der vorhergehenden Ansprüche, **dadurch gekennzeichnet, dass** eine Einbaulagensicherung (4), insbesondere eine Markierung, eine definierte Zuordnung zu einer hoch liegenden dichtungseitige Zugangsöffnung (14) für den Kolbenbypass (12) aufweist.

13. Verstellelement nach einem der vorhergehenden Ansprüche, **dadurch gekennzeichnet, dass** das Verstellelement (1) ein mit der Kolbenstange (10) verbundenes und über den Zylinder (2) umgebendes Schutzrohr (3) aufweist.

14. Verstellelement nach einem der vorhergehenden Ansprüche, **dadurch gekennzeichnet, dass** das Verstellelement (1) eine horizontale oder schwach geneigte Einbaulage, vorzugsweise eine schräge Einbaulage mit einem Neigungswinkel von bis zu ± 5° gegen die Horizontale, aufweist.

15. Verfahren zum Betrieb eines hydropneumatischen Verstellelements (1), welches einen mit Druckgas und einer Flüssigkeit, insbesondere Öl, gefüllten Zylinder (2) mit einer Kolbenstange (10) einer Kolbenstangendichtung (17), einem Kolben (9) und einem Kolbenbypass (12) aufweist, **dadurch gekennzeichnet, dass** das Verstellelement (1) eine vorgegebene liegende Einbaulage einnimmt, wobei der Kolbenbypass (12) derart ausgebildet und angeordnet wird, dass der Übertritt von Flüssigkeit verhindert wird und der Kolben (9) bei ausfahrender Kolbenstange (10) einen Flüssigkeitsstau (22) an der Kolbenstangendichtung (17) für deren Benetzung erzeugt.

## Claims

1. Hydropneumatic adjusting element which has a cylinder (2) which is filled with compressed gas and a liquid, in particular oil, with a plunger rod (10), a plunger rod seal (17), a plunger (9) and a plunger bypass (12), **characterized in that** the adjusting element (1) has a predefined horizontal installation position, the plunger bypass (12) being configured and arranged in such a way that the transfer of liquid is prevented and, in the case of an extending plunger rod (10), the plunger (9) generates a liquid accumulation (22) at the plunger rod seal (17) in order to wet it.

2. Adjusting element according to Claim 1, **characterized in that** a seal-side access opening (14) for the plunger bypass (12) is arranged above the central cylinder axis (11).

3. Adjusting element according to Claim 1 or 2, **characterized in that** the plunger bypass (12) is arranged in the plunger rod (10), the seal-side access opening (14) of the said plunger bypass (12) being arranged on the upper side of the plunger rod (10).

4. Adjusting element according to Claim 1, 2 or 3, **characterized in that** the adjusting element (1) has a blocking mechanism (16), a bypass (12) and a blocking mechanism (16) preferably being arranged in the plunger rod (10).

5. Adjusting element according to one of the preceding claims, **characterized in that** a disc or sleeve (20) which surrounds the plunger rod (10) at a radial spacing is arranged in front of the plunger rod seal (17).

6. Adjusting element according to Claim 5, **characterized in that** the disc or sleeve (20) has a passage opening (21) which lies at the bottom for the passage of liquid.

7. Adjusting element according to one of the preceding claims, **characterized in that** a seal-side access opening (14) for the plunger bypass (12) is arranged on the plunger rod (10) at such a spacing in front of the plunger (9) that, in the case of an extended plunger rod (10), it is situated in the region of a plunger stop (24).

8. Adjusting element according to one of the preceding claims, **characterized in that** the liquid quantity is adapted to the volume of the pressure space (19) in front of the extended plunger (9).

9. Adjusting element according to one of the preceding claims, **characterized in that** a storage element (27) for the liquid, in particular the oil, is arranged in the pressure space (19).

10. Adjusting element according to one of the preceding claims, **characterized in that** a storage element (27) which is preferably of annular and sponge-like configuration, in particular as a cellular elastomer, is surrounded on the circumferential side by a dimensionally stable sleeve (28).

11. Adjusting element according to one of the preceding claims, **characterized in that** the adjusting element (1) has an installation position safeguard (4), in particular a marking.

12. Adjusting element according to one of the preceding claims, **characterized in that** an installation position safeguard (4), in particular a marking, has a defined correlation to a raised seal-side access opening (14) for the plunger bypass (12).

13. Adjusting element according to one of the preceding claims, **characterized in that** the adjusting element (1) has a protective tube (3) which is connected to the plunger rod (10) and surrounds the cylinder (2).

14. Adjusting element according to one of the preceding claims, **characterized in that** the adjusting element (1) has a horizontal or slightly inclined installation position, preferably an oblique installation position with an angle of inclination of up to ± 5° with respect to the horizontal.

15. Method for operating a hydropneumatic adjusting element (1) which has a cylinder (2) which is filled with compressed gas and a liquid, in particular oil, with a plunger rod (10), a plunger rod seal (17), a plunger (9) and a plunger bypass (12), **characterized in that** the adjusting element (1) assumes a predefined horizontal installation position, the plunger bypass (12) being configured and arranged in such a way that the transfer of liquid is prevented and, in the case of an extending plunger rod (10), the plunger (9) generates a liquid accumulation (22) at the plunger rod seal (17) in order to wet it.

## Revendications

1. Élément de réglage hydropneumatique, qui présente un cylindre (2) rempli d'un gaz sous pression et d'un liquide, en particulier d'huile, comprenant une tige de piston (10), un joint de tige de piston (17), un piston (9) et une dérivation de piston (12),
**caractérisé en ce que**
l'élément de réglage (1) présente une position d'installation située prédéfinie, la dérivation de piston (12) étant réalisée et disposée de telle sorte que le débordement de liquide soit empêché et que le piston (9), lorsque la tige de piston (10) est sortie, produise une accumulation de liquide (22) au niveau du joint de tige de piston (17) en vue de mouiller celui-ci.

2. Élément de réglage selon la revendication 1,
**caractérisé en ce**
**qu'**une ouverture d'accès (14) du côté du joint pour la dérivation de piston (12) est disposée au-dessus de l'axe central du cylindre (11).

3. Élément de réglage selon la revendication 1 ou 2,
**caractérisé en ce que**
la dérivation de piston (12) est disposée dans la tige de piston (10), son ouverture d'accès (14) du côté du joint étant disposée au niveau du côté supérieur de la tige de piston (10).

4. Élément de réglage selon la revendication 1, 2 ou 3,
**caractérisé en ce que**
l'élément de réglage (1) présente un mécanisme de blocage (16), de préférence une dérivation (12) et un mécanisme de blocage (16) étant disposés dans la tige de piston (10).

5. Élément de réglage selon l'une quelconque des revendications précédentes,
**caractérisé en ce que**
une rondelle ou une douille (20) est disposée avant le joint de tige de piston (17), laquelle entoure la tige de piston (10) avec un espacement radial.

6. Élément de réglage selon la revendication 5,
**caractérisé en ce que**
la rondelle ou la douille (20) présente une ouverture de passage située vers le bas (21) pour le passage de liquide.

7. Élément de réglage selon l'une quelconque des revendications précédentes,
**caractérisé en ce**
**qu'**une ouverture d'accès du côté du joint (14) pour la dérivation de piston (12) est disposée au niveau de la tige de piston (10) avant le piston (9) avec un espacement tel qu'elle se trouve dans la région d'une butée de piston (24) lorsque la tige de piston (10) est sortie.

8. Élément de réglage selon l'une quelconque des revendications précédentes, **caractérisé en ce que** la quantité de liquide est adaptée au volume de l'espace de pression (19) avant que le piston (9) ne soit sorti.

9. Élément de réglage selon l'une quelconque des revendications précédentes, **caractérisé en ce que** dans l'espace de pression (19) est disposé un élément accumulateur (27) pour le liquide, en particulier pour l'huile.

10. Élément de réglage selon l'une quelconque des revendications précédentes, **caractérisé en ce qu'**un élément accumulateur (27) réalisé de préférence sous forme annulaire et de type spongieux, en particulier sous forme d'élastomère cellulaire, est entouré du côté de la périphérie par une douille (28) de forme stable.

11. Élément de réglage selon l'une quelconque des revendications précédentes, **caractérisé en ce que** l'élément de réglage (1) présente une fixation de la position d'installation (4), en particulier un marquage.

12. Élément de réglage selon l'une quelconque des revendications précédentes, **caractérisé en ce qu'**une fixation de la position d'installation (4), en particulier un marquage, présente une affectation définie à une ouverture d'accès (14) du côté du joint situé en haut pour la dérivation de piston (12).

13. Élément de réglage selon l'une quelconque des revendications précédentes, **caractérisé en ce que** l'élément de réglage (1) présente un tube de protection (3) connecté à la tige de piston (10) et entourant le cylindre (2).

14. Élément de réglage selon l'une quelconque des revendications précédentes, **caractérisé en ce que** l'élément de réglage (1) présente une position d'installation horizontale ou faiblement inclinée, de préférence une position d'installation oblique avec un angle d'inclinaison de jusqu'à ± 5° par rapport à l'horizontale.

15. Procédé pour faire fonctionner un élément de réglage hydropneumatique (1) qui présente un cylindre (2) rempli d'un gaz sous pression et d'un liquide, en particulier d'huile, comprenant une tige de piston (10), un joint de tige de piston (17), un piston (9) et une dérivation de piston (12), **caractérisé en ce que** l'élément de réglage (1) adopte une position d'installation située prédéfinie, la dérivation de piston (12) étant réalisée et disposée de telle sorte que le débordement de liquide soit évité et que le piston (9), lorsque la tige de piston (10) est sortie, produise une accumulation de liquide (22) au niveau du joint de tige de piston (17) en vue de mouiller celui-ci.
